Europäisches Patentamt

European Patent Office

Office européen des brevets

(19)

(11) **EP 0 620 234 B1**

(12) **FASCICULE DE BREVET EUROPEEN**

(45) Date de publication et mention
de la délivrance du brevet:
**18.03.1998 Bulletin 1998/12**

(51) Int Cl.6: **C08F 220/08**

(21) Numéro de dépôt: **94400742.6**

(22) Date de dépôt: **06.04.1994**

(54) **Procédé de préparation d'une dispersion aqueuse préréticulée par de l'anhydride méthacrylique**

Verfahren zur Herstellung einer wässrige Dipersion von Methacrylsäure Anhydrid vorvernetzt

Process for preparing an aqueous dispersion pre-crosslinked with methacrylic acid anhydride

(84) Etats contractants désignés:
**AT BE CH DE DK ES FR GB GR IE IT LI LU NL PT SE**

(30) Priorité: **14.04.1993 FR 9304369**

(43) Date de publication de la demande:
**19.10.1994 Bulletin 1994/42**

(73) Titulaire: **ELF ATOCHEM S.A.
92091 Paris Cédex 42 (FR)**

(72) Inventeurs:
• **Vanhoye, Didier
F-27000 Evreux (FR)**
• **Wiegert, Bernard
F-57600 Forbach (FR)**

(74) Mandataire: **Eidelsberg, Victor Albert et al
Cabinet Flechner
22, Avenue de Friedland
75008 Paris (FR)**

(56) Documents cités:
**GB-A- 781 400          US-A- 3 764 477**

**Description**

L'invention se rapporte au procédé de préparation de dispersions aqueuses utilisées notamment comme liants dans des compositions de peinture, dans des compositions adhésives résistant à la chaleur, comme colles de contact, comme lasures, dans l'emballage alimentaire pour obtenir des revêtements antigras et des papiers de luxe, pour la finition du cuir et des matières textiles et, d'une manière générale, comme revêtements.

Par le brevet des Etats-Unis d'Amérique N° 4 048 130, on sait déjà préparer une dispersion aqueuse préréticulée par copolymérisation en émulsion d'un monomère dur dont un homopolymère a une température de transition vitreuse supérieure à 30°C et a une seule insaturation éthylénique dans la molécule et d'un monomère souple dont un homopolymère a une température de transition vitreuse inférieure à 10°C et a au plus une insaturation éthylénique dans la molécule, les proportions des deux monomères étant telles que la température de transition vitreuse soit comprise entre 5 et 25°C, en présence d'un monomère réticulant qui peut être le N-méthylol(méth)acrylamide. Ces amides sont copolymérisés avec les autres monomères et réticulent sous l'effet de la chaleur pour former un réseau tridimensionnel en améliorant les propriétés chimiques et physico-chimiques des revêtements formés. Mais cette autoréticulation thermique se fait avec libération de formol, dont la présence est de moins en moins souhaitée en raison de sa toxicité, notamment dans les domaines alimentaires, du textile et autres. En outre, la gamme de températures dans laquelle cette autoréticulation s'effectue préférentiellement est relativement haute (150 à 200°C) et ne convient pas à certaines applications, par exemple pour le cuir.

L'invention pallie ces inconvénients par un procédé de préparation d'une dispersion aqueuse, qui met en oeuvre un monomère réticulant ne dégageant pas de formol et qui permet d'opérer à des températures plus basses qu'auparavant. La dispersion obtenue donne une augmentation du brillant à faible angle (20° sur le film libre) et une diminution de la reprise d'eau du film de revêtement, sans nuire aux autres propriétés.

Le procédé suivant l'invention est défini à la revendication 1.

Le monomère dur qui est polymérisé suivant l'invention, est un monomère dont un homopolymère a une température de transition vitreuse supérieure à 30°C et de préférence, comprise entre 30°C et 150°C. Comme monomère de ce genre, on peut mentionner l'acrylonitrile, le chlorure de vinyle, l'acétate de vinyle, l'ester vinylique de l'acide chloroacétique, l'ester vinylique de l'acide trifluoroacétique, l'ester vinylique de l'acide benzoïque, le styrène, l'a-méthylstyrène, le vinyltoluène et des méthacrylates ayant de 1 à 4 atomes de carbone dans le radical ester tel que le méthacrylate de méthyle, le méthacrylate d'éthyle, le méthacrylate de propyle, le méthacrylate de butyle, le méthacrylate d'isopropyle et le méthacrylate d'isobutyle, avec une préférence toute particulière pour le styrène dont la température de transition vitreuse est de 100°C et surtout, pour le méthacrylate de méthyle dont la température de transition vitreuse est de 105°C.

Comme monomère souple, dont un homopolymère a une température de transition vitreuse inférieure à 10°C, on peut citer des acrylates ayant de 1 à 8 atomes de carbone dans le radical ester, tel que l'acrylate de méthyle, l'acrylate d'éthyle, l'acrylate de propyle, l'acrylate d'heptyle, l'acrylate de butyle, l'acrylate d'octyle, l'acrylate de pentyle, l'acrylate d'isobutyle, l'acrylate d'hexyle, l'acrylate de butyle secondaire, l'acrylate d'éthylhexyle, l'acrylate de butyle tertiaire, l'acrylate d'isopropyle, l'acrylate de 2-méthyl-1-butyle, l'acrylate de diméthylpropyle, l'acrylate de 3-méthyl-1-butyle, l'acrylate de 2-pentyle, l'acrylate de 2-méthyl-2-butyle, l'acrylate de 3-pentyle, l'acrylate de 3-méthyl-2-butyle, l'acrylate de 2-éthyl-1-butyle, l'acrylate de 2-méthyl-1-pentyle, l'acrylate de 3,3-diméthyl-1-butyle, l'acrylate de 3-méthyl-1-pentyle, l'acrylate de 3,2-diméthyl-1-butyle, l'acrylate de 3-méthyl-2-pentyle, l'acrylate de 2,2-diméthyl-3-butyle, l'acrylate de 4-méthyl-2-pentyle, l'acrylate de 2,3-diméthyl-2-butyle, l'acrylate de 2-méthyl-3-pentyle, l'acrylate de 2,4-diméthyl-3-pentyle, l'acrylate de 3-méthyl-2-pentyle, l'acrylate de 2,4-diméthyle-1-pentyle, l'acrylate de 3-méthyle-3-pentyle, l'acrylate de 2,3,3-triméthyl-2-butyle, l'acrylate de 2-hexyle, l'acrylate de 2,4,4-triméthyl-1-pentyle, l'acrylate de 3-hexyle et l'acrylate de 2-octyle, des méthacrylates ayant de 16 à 18 atomes de carbone dans le radical ester tel que le méthacrylate d'hexyle, le méthacrylate d'octyle, le méthacrylate de décyle normal, le méthacrylate de tétradécyle normal, le méthacrylate d'heptyle, le méthacrylate de pentadécyle,, le méthacrylate de nonyle, le méthacrylate d'hexadécyle, le méthacrylate d'undécyle, le méthacrylate d'heptadécyle, le méthacrylate de dodécyle, le méthacrylate d'octadécyle, le méthacrylate de tridécyle, le méthacrylate de 2-éthyl-1-butyle, le méthacrylate de 3-éthyle, le méthacrylate de 2-méthyl-1-pentyle, le méthacrylate de 2-hexyle, le méthacrylate de 3-méthyle-1-pentyle, le méthacrylate de 2,3,3-triméthyl-2-butyle, le méthacrylate de 4-méthyl-2-pentyle, le méthacrylate de 3-méthyl-2-pentyle, le méthacrylate de 4-méthyl-1-pentyle, le méthacrylate de 2-méthyl-2-pentyle, le méthacrylate de 2-octyle, le méthacrylate de 3-méthyl-3-pentyle, le méthacrylate de 2,3-diméthyl-1-butyle, le méthacrylate de 3,3-diméthyl-1-butyle, le méthacrylate de 2,3-diméthyl-2-butyle, le méthacrylate de 2,4-diméthyl-3-pentyle, le méthacrylate de 2,4-diméthyl-1-pentyle et le méthacrylate de 3-méthyl-2-isopropyl-1-butyle, des esters vinyliques ayant de 3 à 20 atomes de carbone dans le radical acide, de préférence ceux ayant une chaîne ramifiée telle que le propionate de vinyle, le butyrate de vinyle, le valérate de vinyle, le capronate de vinyle, le stéarate de vinyle, l'azobutyrate de vinyle, le versatate de vinyle, l'isobutyrate de vinyle, le 2-méthylbutanoate de vinyle, l'isovalérate de vinyle, le pivalate de vinyle, le 4-méthylpentanoate de vinyle, l'isocapronate de vinyle, le 2-méthylpentanoate de vinyle, le 2-éthylbutanoate de vinyle, le 3-méthylpentanoate de vinyle, le 2,2-diméthylbutanoate de vinyle, l'heptanoate de vinyle, le 3,3-diméthylbutanoate de vinyle, l'octanoate de vinyle, le 2,3-diméthylbutanoate de vinyle, le nonanoate de vinyle, le 2-éthylhexanoate de vinyle, le décanoate de vinyle, le tétradécanoate de vinyle, le pentadécanoate de vinyle, le dodécanoate de vinyle, le palmitate de vinyle, l'indécanoate de vinyle, le margarate de vinyle, le tridécanoate de vinyle, le nonadécanoate de vinyle et l'arachidate de vinyle; des oléfines ayant de 2 à 10 atomes de carbone tels que l'éthylène, le butylène, le propylène, le 2,3-diméthyl-1-butène, le 2-butène, le 3,3-diméthyl-1-butène, le 3-méthyl-2-butène, le 2,3-diméthyl-2-butène, le 3-méthyl-1-butène, le 2-éthyl-3-méthyl-1-butène, le 2-méthyl-1-butène, le 2-méthylpropène, le 2-éthyl-1-butène, le 1-pentène, le 2-méthyl-2-butène, le 2-pentène, le tétraméthyléthylène, le 3-méthyl-2-pentène, le méthylisopropyléthylène dissymétrique, le 2,3,4,4-tétraméthyl-1-hexéne, le 3,4,5,5-tétraméthyl-2-hexéne, le T-butyléthylène, le 3,4,5,5 3,4,5,5-tétraméthyl-2-hexène, le 2-éthyle-1-penténe, le 3,5,5-triméthyl-2-heptène, le 2-méthyl-1-pentène, le 2,3-diméthyl-1-pentène, le 3-méthyl-1-pentène, le 2,4-diméthyl-1-pentène, le 4-méthyl-1-penténe, le 3-3-2,4-diméthyl-1-pentène, le 4-méthyl-1-pentène, le 2-3-diméthyl-2-pentène, le 2-méthyl-2-pentène, le 2,4-diméthyl-2-pentène, le 3-méthyl-2-pentène, le 3,4-diméthyl-2-pentène, le 4-méthyl-2-pentène, le 4-diméthyl-2-pentène, le 1-hexène, le 2-hexène, le 3-hexène, le 2-methyl-1-hexène, le 2,5-diméthyl-3-hexène, le 3-méthyl-1-hexène, le 1-heptène, le 4-méthyl-1-hexène, le 2-heptène, le 5-méthyl-1-hexène, le 3-heptène, le 2-méthyl-2-hexène, le 1-heptène, le 3-méthyl-2-hexène, le 4-méthyl-2-hexène, le 2,4,4-triméthyl-1-pentène, le 5-méthyl-2-hexène, le 2,4,4-triméthyl-2-pentène, le 2-méthyl-3-hexène, le 2,3,4-triméthyl-2-pentène, le 2,2-diméthyl-3-hexène, le 1-nonène, le 3,3-diméthyle-4-hexène et le 1-décène, des dioléfines ou diènes ayant de 3 à 10 atomes de carbone, tel que le propadiène, le 1,2-butadiène, le 4-méthyl-1,3-pentadiène, le 1,3-butadiène, le 2,3-pentadiène ou le 3-méthyl-1,2-butadiène, le 2,4-hexadiène, le 2-méthyl-1,3-butadiène, le 1,2-pentadiène, le 2,3-diméthyl-1,3-butadiène, le 1,3-pentadiène, le 2,5-diméthylhexadiène, le 1,4-pentadiène, le 2,6-diméthylheptadiène, le 1,5-hexadiène, le 2,4-hexadiène, le 3,7-diméthyl-1,6-octadiène, le 1,6-octadiène, le 2,6-diméthyl-2,6-octadiène, le 2,6-octadiène, le 7-méthyl-2,4-octadiène, le 2,4-octadiène, le 2,7-octadiène, le 2,4-diméthyl-3-isopropyle-1,3-pentadiène, le nonadiène, le 1,3-décadiène, le 2,3,3,4-tétraméthyl-1,4-pentadiène, des maléates ayant de 4 à 18 atomes de carbone dans le radical ester, tel que le maléate de butyle, le maléate d'isobutyle, le maléate de pentyle, le maléate de butyle tertiaire, le maléate d'hexyle, le maléate de diméthylpropyle, le maléate d'heptyle, le maléate de 2-méthyl-2-butyle, le maléate d'octyle, le maléate de 2,3-diméthyl-1-butyle, le maléate de décyle, le maléate de 2,2-diméthyl-2-butyle, le maléate d'undécyle, le maléate de 2,3-diméthyl-2-butyle, le maléate de dodécyle, le maléate d'octadécyle, le maléate de nonyle, le maléate de tridécyle, le maléate d'heptadécyle, le maléate de tétradécyle, le maléate de pentadécyle, le maléate d'hexadécyle, le maléate de 2-méthyl-1-pentyl, le maléate de 2,4-diméthyl-3-pentyle, le maléate de 3-méthyl-1-pentyle, le maléate de 2,4-diméthyl-1-pentyl, le maléate de 4-méthyl-1, le maléate de 2,3,3-triméthyl-2-butyle, le maléate de 3-méthyl-2-pentyle, le maléate de 2-ethyl-1-hexyle, le maléate de 4-méthyl-2-pentyle, le maléate de 2-octyle, le maléate de 2-méthyl-1-pentyle, le maléate de 2,4,4-triméthyl-1-pentyle, le maléate de 3-méthyl-3-pentyle, le maléate de 2,3,4-triméthyl-1-pentyle, le maléate de 2-méthyle-2-pentyle, le maléate de 2,3,4-triméthyl-2-pentyle, le maléate de 2-éthyl-1-butyle, le maléate de 3,3,4-triméthyl-1-pentyle, et le maléate de 3-méthyl-2-isopropyl-1-butyle, des fumarates ayant de 4 à 18 atomes de carbone dans le radical ester, tel que le fumarate de butyle, le fumarate de 2-méthyl-1-butyle, le fumarate de pentyle, le fumarate de 3-méthyl-1-butyle, le fumarate d'hexyle, le fumarate de nonyle, le fumarate d'undécyle, le fumarate d'octyle, le fumarate d'octadécyle, le fumarate d'heptadécyle, le fumarate de décyle, le fumarate de pentadécyle, le fumarate d'hexadécyle, le fumarate de dodécyle, le fumarate de tert-butyle, le fumarate de 2-octyle, le fumarate de tridécyle, le fumarate de diéthylpropyle, le fumarate de tert-tétradécyle, le fumarate de 3-méthyl-2-isopropyl-1-butyle, le fumarate d'isobutyle, le fumarate de 2-méthyl-1-pentyle, le fumarate de 2-3-diméthyl-1-butyle, le fumarate de 3-méthyl-1-pentyle, le fumarate de 2,2-diméthyl-2-butyle, le fumarate de 2-éthyl-1-butyle, le fumarate de 2,3-diméthyl-2-butyle, le fumarate de 4-méthyl-1-pentyle, le fumarate de 2,4-diméthyl-3-pentyle, le fumarate de 3-méthyl-2-pentyle, le fumarate de 2,4-diméthyl-1-pentyle, le fumarate de 4-méthyl-2-pentyle, le fumarate de 2-méthyl-3-le fumarate de 3-méthyl-3-pentyle, le fumarate de 2-méthyl-2-pentyle, le fumarate de 2,3,3-triméthyl-2-butyle, le fumarate de 2,4,4-triméthyl-1-pentyle, le fumarate de 2,3,4-triméthyl-1-pentyle, le fumarate de 3,3,4-triméthyl-1-pentyle et le fumarate de 2,3,4-triméthyl-2-pentyle. On préfère un acrylate ayant de 1 à 8 atomes de carbone dans le radical ester tel que l'acrylate d'éthyle, l'acrylate de butyle normal qui est particulièrement préféré, l'acrylate d'isobutyle, l'acrylate de butyle secondaire, l'acrylate de butyle tertiaire.

La température de transition vitreuse de la dispersion peut être calculée en utilisant la loi de Fox, à savoir $1/Tg = \Sigma_i \frac{Wi}{Tgi}$

Wi étant le pourcentage pondéral du constituant i et Tgi étant sa température de transition vitreuse exprimée en °K.

Le monomère dur représente, en général, de 30 à 70 % et le monomère souple de 30 à 70 % du poids des matières solides de la dispersion.

Le monomère réticulant représente, de préférence, de plus de 2 à 3 % du poids des matières solides de la dispersion.

Il est avantageux d'ajouter au mélange à polymériser un monomère acide carboxylique en une quantité représentant de 0,5 à 5 % et, de préférence, de 0,5 à 2 % du poids des matières solides de la dispersion, ainsi qu'un monomère hydrophile, de préférence de l'acrylamide, en une quantité représentant de 0,2 à 3 % et, de préférence, de 0,2 à 1 %

EP 0 620 234 B1

du poids des matières solides de la dispersion. Comme monomère acide, on peut citer les acides oléfiniques ayant de 3 à 7 atomes de carbone ou davantage tel que l'acide acrylique, l'acide β-méthacrylique, l'acide crotonique, l'acide méthacrylique, l'acide isocrotonique, l'acide vinylacétique, l'acide β-penténoïque , l'acide allylacétique, l'acide angélique, l'acide tiglique et l'acide isohydrosorbique, des acides dicarboxyliques insaturés ayant de 4 à 8 atomes de carbone ou davantage d'atomes de carbone, tel que l'acide maléique, l'acide fumarique, l'acide citraconique, l'acide mésaconique, l'acide itaconique, l'acide méthylmaléique, l'acide méthylitaconique et l'acide glutaconique; les anhydrides (autres que l'anhydride méthacrylique), nitriles, amides, halogénures et sels de ces acides peuvent être également utilisés.

Dans la présente invention, il a été constaté de manière surprenante que l'anhydride méthacrylique ne faisait pas l'objet d'une hydrolyse dans les conditions de polymérisation en émulsion et ne donne donc pas de fonctions $CO_2H$. L'ouverture de la fonction anhydride n'est pas non plus réalisée lors de la la neutralisation par $NH_4OH$ jusque pH 9 et les dispersions obtenues ne montrent aucune augmentation de la viscosité au stockage prouvant la bonne stabilité de la réticulation apportée par l'anhydride méthacrylique.

On effectue la polymérisation dans les conditions classiques d'une polymérisation en émulsion en utilisant comme catalyseur un persulfate tel que le persulfate d'ammonium, le persulfate de potassium ou le persulfate de sodium à raison de 0,005 à 0,5 % en poids du poids total des monomères et en utilisant, de préférence un activateur choisi parmi les sulfites, les hydrogénosulfites et les métabisulfites, avec une préférence toute particulière pour le métabisulfite de sodium. On peut utiliser également les couples formaldéhyde-sulfosuccinate hydroperoxyde de tétrabutyle-FE$^{II}$. L'émulsion est obtenue avec des agents tensio-actifs qui sont, de préférence, un mélange d'un agent tensio-actif non ionique et d'un agent tensio-actif anionique. On peut citer notamment des alcoylsulfates, des alcoylsulfonates et des alcoylarylsulfonates, ainsi que des esters de l'acide sulfosuccinique avec des alcanols.

On effectue en général la polymérisation à une température comprise entre 55 et 85°C et, de préférence, entre 65 et 70°C. On peut l'effectuer sous la pression normale, mais également sous une pression supérieure à la pression atmosphérique ou en légère dépression, sans que cela porte atteinte à la réaction.

La dispersion aqueuse obtenue comprend en général de 45 à 55 % en poids d'eau et de 55 à 45 % en poids du polymère préparé par le procédé mentionné ci-dessus.

Les dispersions aqueuses suivant l'invention peuvent être pigmentées, le rapport pondéral du pigment aux autres substances solides du revêtement étant compris entre 1:20 et 20:1. On peut utiliser des pigments organiques et/ou minéraux. Comme exemple de pigment on peut citer du dioxyde de titane, de l'oxyde de fer, de l'oxyde de chrome, de l'oxyde de cadmium, du gypse, du silicate de calcium, de la poudre de quartz, du talc, de la suie, du carbonate de calcium, de la baryte et des colorants organiques.

La composition de peinture ainsi obtenue peut être appliquée par tout moyen convenable, par exemple par pulvérisation, au pinceau, au rouleau, au trempé, etc. Elle peut s'appliquer à tout substrat et notamment à des substrats métalliques, tels que le fer, l'acier, l'acier chromé, l'acier étamé, l'aluminium, le cuivre, le bronze et le laiton, à des surfaces en céramique et également à des surfaces en bois.

Les exemples suivants illustrent l'invention.

Dans le présent mémoire, on utilise les abréviations et mesures suivantes.

| MAM | Méthacrylate de méthyle |
|---|---|
| ABU | Acrylate de butyle |
| AA | Acide acrylique |
| NMA | N méthylolacrylamide |
| ACRYD | Acrylamide |
| $AMA_2O$ | Anhydride méthacrylique |
| HV 25 (REWO) | Nonylphénolpolyoxyéthylène n = 25 |
| NOS 25 (REWO) | Nonylphénolpolyoxyéthylène sulfate n = 25 |
| MBS Na | Métabisulfite de sodium |
| PS $NH_4$ | Persulfate d'ammonium |
| Tg | Température de transition vitreuse obtenue par analyse thermique différentielle |
| TMF | Température minimale de filmication, qui est la température en dessous de laquelle il est impossible de former un film cohésif et adhésif sans mettre en oeuvre un agent de coalescence. Elle est mesurée selon la norme DIN 53787 |
| IG | indice de gonflement. Cet indice permet de déterminer la réticulation d'un polymère acrylique par sa résistance à un solvant. |

On découpe des éprouvettes de 10 x 25 mm d'un poids Po dans un film sec de 2 mm d'épaisseur préalablement séché pendant 24 heures à la température ambiante, pendant 8 heures à 40°C sous vide et refroidi sous vide. On introduit une éprouvette dans un flacon de 60cm$^3$ auquel on ajoute 50cm$^3$ d'acétone pour l'immerger complètement. On agite

4

le flacon pendant 16 heures sur un agitateur à rouleaux muni également d'un mouvement de bascule (vitesse d'agitation des rouleaux: 50t/mn). On retire l'éprouvette du flacon et on la sèche superficiellement avec du papier Joseph et l'on pèse (P1) l'éprouvette gonflée de solvant le plus rapidement possible. On l'introduit dans un cristallisoir et on la sèche pendant 12 heures à 60°C, puis pendant 4 heures à 60°C sous vide. On la laisse refroidir dans un dessicateur et on la pèse (P2) , l'indice de gonflement est $\frac{P1}{P2}$

La taille des particules est obtenue selon la méthode décrite par A.LECLOUX, H.HEYNS, Y.GOBILLON dans Ind. Chim Belge T35 N° 1 (1970).

La mesure de la dureté Persoz est effectuée selon la norme DIN 53 157.

La reprise d'eau d'un polymère est effectuée selon la norme DIN 53495.

le brillant spéculaire sous un angle de 20°, 60° et 85° est déterminé sur verre filmographe pour une épaisseur de 300µm 24 heures après l'application.

Exemple 1

a) Composition en parties en poids

| Constituants | Pied | Préémulsion | Catalyseur | Total |
|---|---|---|---|---|
| $H_2O$ | 50 p | 44 p | 6 p | 100 p |
| NOS 25 | 0,25 p | 2,25 p | - | 2,5 p |
| HV 25 | 0,05 p | 0,45 p | - | 0,5 p |
| MBSNa | 0,3 p | - | - | 0,3 p |
| $PSNH_4$ | - | - | 0,3 p | 0,3 p |
| MAM | - | 51 p | - | 51 p |
| ABU | - | 47 p | - | 47 p |
| AA | - | 1 p | - | 1 p |
| NMA | - | 1 p | - | 1 p |

b) Mode opératoire

Dans un réacteur de 5 litres, plongé dans un bain-marie, on introduit le pied, on dégaze le réacteur à l'azote et on porte le contenu du réacteur à 67 ± 1°C tout en laissant un léger balayage d'azote.

Quand la température est atteinte, on introduit en 4 h 30 la préémulsion et la solution de persulfate d'ammonium (catalyseur) tout en maintenant la température à 67 ± 1°C et en agitant à 200 tr/mn.

Les introductions terminées, on laisse cuire pendant 2 heures à 67 ± 1°C.

On arrête alors le chauffage et le bullage d'azote et on refroidit le mélange réactionnel à 30°C. On filtre alors la dispersion pour éliminer le préfloc.

On prend le pH et l'on neutralise avec du $NH_4OH$ (20 %) jusqu'à pH = 9.

On étudie l'influence de l'introduction d'AMA$_2$O en diminuant la proportion de MAM de façon à garder la concentration pondérale en monomères constante et à ne pas trop augmenter la température de transition vitreuse du film (Tg AMA$_2$O estimée à +144°C).

| Essai | 1** | 2** | 3 |
|---|---|---|---|
| MAM | 51 | 49 | 46 |
| ABu | 47 | 47 | 47 |
| AA | 1 | 1 | 1 |
| NMA | 1 | 1 | 1 |
| $AMA_2O$ | - | 2 | 5 |
| pH | 2,05 | 2,1* | 2,1* |
| Visco Brookfield mPas | 174 | 140 | 120 |
| Taille particules µm | 0,141 | 0,152 | 0,153 |
| Tension superficielle | 45,5 | 45,2 | 44,5 |
| Matières sèches (%) | 50,2 | 50,2 | 50,04 |

* pas de diminution du pH avec introduction d'AMA$_2$O car pas d'ouverture de l'anhydride

** non conforme à l'invention

(suite)

| Essai | 1** | 2** | 3 |
|---|---|---|---|
| Tg °C | 13 | 17 | 22,5 |
| TMF °C | 17 | 19-20 | 26 |
| % gel | 76,95 | 87,1 | 89,2 |
| IG (acétone) | 28,0 | 17,7 | 6,2 |
| Stabilité | | | |
| Chimique CaCl$_2$ 10 % | bonne | bonne | bonne |
| Stockage (Rapport de la viscosité à 20°C entre la dispersion stockée 1 mois à 60°C et la dispersion stockée 1 mois à 20°C) | 0,951 | 0,914 | 0,933 |
| Brillant (20,60,85) | 44-79-97,5 | 54-79-91 | 22-58-66 |
| Reprise d'eau | 4,9-5,3 | 4,6-4,7 | 4,33-4,25 |

** non conforme à l'invention

L'utilisation d'AMA$_2$O provoque une augmentation de la TMF du film, en liaison avec la Tg de l'AMA$_2$O.

Cette augmentation de Tg est cependant supérieure à celle attendue et correspond à une réticulation qui est confirmée par l'augmentation du % gel et une diminution de l'indice de gonflement.

## Exemple 2

L'exemple 1 ayant montré que l'on pouvait remplacer une partie du NMA par de l'AMA$_2$O, on remplace, dans cet exemple, tout le NMA par de l'AMA$_2$O. (tableau I)

La teneur en AMA$_2$O pour assurer une réticulation suffisante des particules est supérieure à 2 parties poids.

L'introduction de quantités d'AMA$_2$O supérieures à 2 parties oblige à diminuer le monomère dur (MAM) et à augmenter le monomère souple (ABu).

Le brillant à 20° augmente avec la teneur en AMA$_2$O. La reprise d'eau est fortement diminuée par l'absence de NMA et cette reprise d'eau diminue aussi avec la teneur en AMA$_2$O (dû au caractère hydrophobe apporté par l'AMA$_2$O).

## Tableau I
### Étude du remplacement total de la NMA par l'AMA$_2$O

| ESSAI | 6** | 4** | 5 | 7 | 8 | 17 |
|---|---|---|---|---|---|---|
| MAM | 52 | 50 | 47 | 44 | 46 | 46 |
| ABu | 47 | 47 | 47 | 50 | 50 | 50,2 |
| AA | 1 | 1 | 1 | 1 | 1 | 1 |
| NMA | – | – | – | – | – | – |
| AMA$_2$O | – | 2 | 5 | 5 | 3 | 2,8 |
| PH final | 2,15 | 2,1 | 2,1 | 2,15 | 2,1 | 2,3 |
| Observations | filtration facile | filtration facile | filtration facile | filtration facile | filtration facile | filtration facile |
| Visco brookfield (ph=9) mPas | 152 | 128 | 120 | 120 | 132 | 118 |
| Taille particules (mm) | 0 152 | 0,156 | 0,157 | 0,157 | 0,146 | 0,174 |
| Tension superf.Dyne/cm | 44 | 45,2 | 44,8 | 44,8 | 44,8 | – |
| Matières sèches % | 50,9 | 50,22 | 50,07 | 49,9 | 49,9 | 50,0 |
| Tg (°C) | 12 | 17,5 | 21 | 13 | 11 | 14 |
| TMF (°C) | 14 | 18 | 25 | 17 | 16 | 18 |
| IG Acétone | soluble | soluble | 13,8 | 14,6 | 24,8 | 17,7 |
| % gel | 0 | 0 | 78,1 | 78,4 | 78,1 | 84,5 |
| Stabilité | | | | | | |
| Chimique CaCl$_2$ 10 % | bonne | bonne | bonne | bonne | bonne | bonne |
| Stockage | 0,921 | 0,933 | 0,965 | 0,933 | 0,933 | 0,922 |
| Brillant (20-60-85) | 60-81-92,5 | 65-83-85,5 | 62-82-91,5 | 57,5-82-92 | 74-81,5-91 | – |
| Reprise eau | | 3,28 | 2,83-3,09 | 2,79-2,90 | 3,25-3,36 | 2,9 | – |

** non conforme à l'invention

Exemple 3

On prépare des dispersions contenant au moins 2 parties d'AMA$_2$O pour assurer une réticulation suffisante et une faible quantité de monomère hydrosoluble pour améliorer la stabilité. (tableau II)

Cette stabilisation peut être obtenue par l'introduction d'une quantité d'acrylamide comprise entre 0,3 et 0,5 parties en poids pour 3 parties de réticulant organosoluble.

On constate dans cette série une nette augmentation du brillant à faible angle et une diminution de la reprise d'eau avec l'introduction de l'AMA$_2$O.

EP 0 620 234 B1

Tableau II

Étude de dispersions contenant à la fois un réticulant hydrophile et l'AMA$_2$O

| ESSAI | 10[**] | 11 | 12 | 13 | 18 | 14 | 15 |
|---|---|---|---|---|---|---|---|
| MAM | 51 | 46 | 46 | 46 | 46 | 44 | 44 |
| ABu | 47 | 49,5 | 49,8 | 49,5 | 49,7 | 49,5 | 49,8 |
| AA | 1 | 1 | 1 | 1 | 1 | 1 | 1 |
| NMA | 1 | 0,5 | 0,2 | - | - | 0,5 | 0,2 |
| ACRYD | - | - | - | 0,5 | 0,3 | - | - |
| AMA$_2$O | - | 3,0 | 3,0 | 3,0 | 3,0 | 5,0 | 5,0 |
| PH final | 2,26 | 2,04 | 2,46 | 2,2 | 2,36 | 1,97 | 1,77 |
| Visco brookfield (ph=9) mPas | 110 | 118 | 109 | 107 | 99 | 104 | 115 |
| Taille particules (mm) | 0,135 | 0,158 | 0,179 | 0,144 | 0,165 | 0,150 | 0,169 |
| Tension superf.Dyne/cm | - | - | - | - | - | - | - |
| Matières sèches % | 50,3 | 50,2 | 50,3 | 49,9 | 49,6 | 49,75 | 50,2 |
| Tg (°C) | 13 | 16,4 | 20,5 | 15,5 | 15 | 17,8 | 17,1 |
| TMF (°C) | 17 | 20 | 20 | 20 | 19 | 23 | 23 |
| Dureté Persoz s | 136 | 142 | 111 | 160 | 141 | 137 | 97 |
| % gel | 80,7 | 88,5 | 78,4 | 77,4 | 77,4 | 83,4 | 81,8 |
| IG | 22,2 | 10,6 | 18,4 | 27,6 | 20,8 | 12,6 | 12,9 |
| Stabilité | | | | | | | |
| Chimique CaCl$_2$ 10 % | bonne | bonne | bonne | bonne | bonne | bonne | bonne |
| Stockage | 1,019 | 0,916 | 1,19 | 0,938 | 0,931 | 0,907 | 0,897 |
| Brillant (20-60-85) | 53-78-96 | - | - | - | 70-83-97 | - | 68-83-98- |
| Reprise eau | 5,0 | - | - | 3,22 | - | 3,78-3,24 | - |

** non conforme à l'invention

Les taux de conversion obtenus dans chaque polymérisation sont très bons compte tenu des extraits secs voisins de 50 % et des teneurs en monomères résiduels très faibles (généralement < 200 ppm).

Exemple 4

On prépare une peinture semi-brillante structurée ayant la composition pondérale suivante:

| Eau | 130 | |
| NATROSOL 250 HHR | 1 | Epaissant |
| Ammoniaque 22 % | 0,5 | Agent neutrilisant |
| Coatex P 90 | 5 | Dispersant |
| Piror P 840 | 2 | Biocide |
| NOPCO NDW (vendu par la société Henkel) | 2 | Antimousse |
| Solution de benzoate de sodium à 30 % | 10 | Agent anti-corrosion |
| Tioxide TR 92 | 220 | Oxyde de titane |
| Kaolin suprême | 50 | Charge |
| Dispersion Modifier $AMA_2O/ACRYD$ à 50%ES | 480 | Liant |
| Propylène glycol | 40 | Co-solvant |
| Butyl diglycol | 30 | Agent de coalescence |
| Eau | 22 | |
| Coatex BR 100 à 50 % | 6 | Modificateur de rhéologie |
| NOPCO NDW | 1,5 | Antimousse |
| | $\overline{1000}$ | |

Les caractéristiques de la peinture semi-brillante structurée obtenues sont (pour une dispersion correspondant à l'essai 10 tableau II):

| E.S.(extrait sec) | 52 + 1% |
| CVP (concentration volumique pigmentaire) | 24 % |
| pH | 8-8,5 |

| VISCOSITE | | |
| --- | --- | --- |
| Cône et plateau 10 000 s$^-$ 1 à 20°C | | 115 cPs |
| Brookfield aiguille 5 à 20°C | 5 t/mn | 20 000 cPs |
| | 50 t/mn | 4 320 cPs |

| VIEILLISSEMENT | | |
| --- | --- | --- |
| 6 jours à 65°C | | |
| Brookfield aiguille 5 à 20°C | 5 t/mn | 22 400 cPs |
| | 50 t/mn | 5 920 cPs |

| COMPATIBILITE PIGMENTAIRE | | |
| --- | --- | --- |
| Mélange de 5 % de bleu COLANYL (pigment de bleu de phtalocyanine) | | |
| Brookfield aiguille 5 à 20°C | 5 t/mn | 14 000 cPs |
| | 50 t/m | 3 960 cPs |
| Après vieillissement 6 j à 65°C | | |

(suite)

| COMPATIBILITE PIGMENTAIRE | | |
|---|---|---|
| Brookfield aiguille 5 à 20°C | 5 t/mn | 12 800 cPs |
| | 50 t/mn | 4 080 cPs |

| PROPRIETES OPTIQUES | | |
|---|---|---|
| Brillant spéculaire | | |
| - sur verre filmographe 300 µm (après 24 heures) | | |
| $\alpha = 20°$ | 6 | |
| $\alpha = 60°$ | 42 | |
| $\alpha = 85°$ | 79 | |
| - sur carte Leneta (Form 1 A), Bar coater 81 µm (après 24 heures) | | |
| | Fond Poreux | Fond non poreux |
| $\alpha = 20°$ | 2,7 | 3,1 |
| $\alpha = 60°$ | 21,7 | 26,7 |
| $\alpha = 85°$ | 45,2 | 56,4 |

**Revendications**

1. Procédé de préparation d'une dispersion aqueuse préréticulée par polymérisation en émulsion d'un monomère dur dont un homopolymère a une température de transition vitreuse supérieure à 30°C et a une seule insaturation éthylénique dans la molécule et d'un monomère souple dont un homopolymère a une température de transition vitreuse inférieure à 10°C et a au plus une insaturation éthylénique dans la molécule, les proportions des deux monomères étant telles que la température de transition vitreuse soit comprise entre 5 et 25°C, en présence d'un acide carboxylique monomère, autre que l'anhydride méthacrylique, représentant de 0,5 à 5% du poids des matières solides de la dispersion, et de plus de 2% du poids des matières solides d'anhydride méthacrylique, l'anhydride méthacrylique servant de monomère réticulant.

2. Procédé suivant la revendication 1, caractérisé en ce que le monomère dur est du méthacrylate de méthyle.

3. Procédé suivant la revendication 1 ou 2, caractérisé en ce que le monomère souple est de l'acrylate de butyle.

4. Procédé suivant l'une des revendications 1 à 3, caractérisé en ce que le monomère dur représente de 30 à 70 %, le monomère souple de 30 à 70 % et le monomère réticulant de 0,5 à 5 % du poids des matières solides de la dispersion.

5. Procédé suivant la revendication 4, caractérisé en ce que le monomère réticulant représente de plus de 2 à 3 % du poids des matières solides de la dispersion.

6. Procédé suivant la revendication 5, caractérisé en ce que le monomère acide carboxylique est de l'acide acrylique.

7. Procédé suivant l'une des revendications précédentes, caractérisé en ce qu'il consiste à ajouter au mélange à polymériser un monomère hydrophile en une quantité représentant de 0,2 à 3 % du poids des matières solides de la dispersion.

8. Procédé suivant la revendication 7, caractérisé en ce que le monomère hydrophile est l'acrylamide.

9. Procédé suivant l'une des revendications précédentes, caractérisé en ce qu'il consiste à effectuer la polymérisation entre 55 et 85°C et, de préférence, entre 65 et 70°C.

10. Dispersion aqueuse comprenant de 45 à 55 % en poids d'eau, caractérisée en ce qu'elle comprend de 55 à 45 % en poids d'un polymère préparé par un procédé suivant l'une des revendications précédentes.

11. Composition de revêtement, caractérisée en ce qu'elle comprend comme liant une dispersion aqueuse suivant la revendication 10.

**Patentansprüche**

1. Verfahren zur Herstellung einer vorvernetzten wässerigen Dispersion durch Emulsionspolymerisation eines harten Monomers, wobei eines seiner Homopolymere eine Glasübergangstemperatur von mehr als 30 °C hat und eine einzige ethylenisch ungesättigte Bindung im Molekül aufweist, und eines weichen Monomers, wobei eines seiner Homopolymere eine Glasübergangstemperatur von weniger als 10 °C hat und mindestens eine ethylenisch ungesättigte Bindung im Molekül aufweist, wobei die Anteile der beiden Monomeren so sind, daß die Glasübergangstemperatur im Bereich von 5 bis 25 °C liegt, in Gegenwart einer monomeren Carbonsäure, außer Methacrylsäureanhydrid, die 0,5 bis 5 Gew.-% der Trockenmasse der Dispersion bildet, und mehr als 2 Gew.-%, bezogen auf die Trockenmasse, Methacrylsäureanhydrid, wobei das Methacrylsäureanhydrid als vernetzendes Monomer dient.

2. Verfahren nach Anspruch 1, dadurch gekennzeichnet, daß das harte Monomer Methylmethacrylat ist.

3. Verfahren nach Anspruch 1 oder 2, dadurch gekennzeichnet, daß das weiche Monomer Butylacrylat ist.

4. Verfahren nach einem der Ansprüche 1 bis 3, dadurch gekennzeichnet, daß das harte Monomer 30 bis 70 %, das weiche Monomer 30 bis 70 % und das vernetzende Monomer 0,5 bis 5 Gew.-% der Trockenmasse der Dispersion bildet.

5. Verfahren nach Anspruch 4, dadurch gekennzeichnet, daß das vernetzende Monomer mehr als 2 und bis zu 3 Gew.-% der Trockenmasse der Dispersion bildet.

6. Verfahren nach Anspruch 5, dadurch gekennzeichnet, daß das Carbonsäuremonomer Acrylsäure ist.

7. Verfahren nach einem der vorhergehenden Ansprüche, dadurch gekennzeichnet, daß es darin besteht, der zu polymerisierenden Mischung ein hydrophiles Monomer in einer Menge, die 0,2 bis 3 Gew.-% der Trockenmasse der Dispersion entspricht, zuzugeben.

8. Verfahren nach Anspruch 7, dadurch gekennzeichnet, daß das hydrophile Monomer Acrylamid ist.

9. Verfahren nach einem der vorhergehenden Ansprüche, dadurch gekennzeichnet-, daß es darin besteht, die Polymerisation bei 55 bis 85 °C und bevorzugt 65 bis 70 °C durchzuführen.

10. Wässerige Dispersion enthaltend 45 bis 55 Gew.-% Wasser, dadurch gekennzeichnet, daß sie 55 bis 45 Gew.-% eines Polymers, das nach einem Verfahren nach einem der vorhergehenden Ansprüche hergestellt wurde, enthält.

11. Beschichtungszusammensetzung, dadurch gekennzeichnet, daß sie als Bindemittel eine wässerige Dispersion nach Anspruch 10 enthält.

**Claims**

1. In a process for preparing a pre-crosslinked aqueous dispersion by emulsion polymerisation of a hard monomer a homopolymer of which has a glass transition temperature greater than 30°C and has a single ethylenically unsaturated bond in the molecule and a soft monomer a homopolymer of which has a glass transition temperature of less than 10°C and has at most one ethylenically unsaturated bond in the molecule, the proportions of the two monomers being such that the glass transition temperature of the dispersion is between 5 and 25°C, in the presence of a carboxylic acid monomer, other than methacrylic anhydride, in a quantity representing from 0,5% to 5% by weight of the solid substances of the dispersion, and of more than 2% by weight of the solid substances of methacrylic anhydride as crosslinking monomer.

2. The process of claim 1, characterised in that the hard monomer is methylmethacrylate.

3. The process of claim 1 or 2, characterised in that the soft monomer is butylacrylate.

4. The process of anyone of claims 1-3, characterised in that the dispersion has solid substances and the hard monomer constitutes 30 to 70%, the soft monomer 30 to 70% and the crosslinking monomer 0.5 to 5% by weight of the solid substances of the dispersion.

5. The process of claim 4, characterised in that the crosslinking monomer constitutes from more than 2 to 3% by weight of the solid substances of the dispersion.

6. The process of claim 5, characterised in that the carboxylic acid monomer is acrylic acid.

7. The process of anyone of the preceeding claims, characterised in that comprises adding to the mixture to be polymerised a hydrophilic monomer in a quantity representing from 0.2 to 3% by weight of the solid substances of the dispersion.

8. The process of claim 7, characterised in that the hydrophilic monomer is acrylamide.

9. The process of anyone of the preceeding claims characterised in that comprises carrying out polymerisation at between 55 and 85°C and, preferably, between 65 and 70°C.

10. Aqueous dispersion comprising from 45 to 55% by weight of water characterised in that it comprises from 55 to 45% by weight of a polymer prepared by a process according to one of the preceeding claims.

11. Coating composition, characterised in that it comprises as a binder an aqueous dispersion as claimed in claim 10.